# EUROPÄISCHE PATENTSCHRIFT

(11) **EP 0 787 312 B1**
(45) Veröffentlichungstag und Bekanntmachung des Hinweises auf die Patenterteilung: **08.01.2003**
(21) Anmeldenummer: 96929173.1
(22) Anmeldetag: 29.07.1996
(51) Int. Cl.: G02B 21/34, G02B 21/26

(54) **OBJEKTHALTER FÜR DÜNNE OBJEKTTRÄGER**
OBJECT HOLDER FOR THIN OBJECT CARRIERS
SUPPORT POUR PORTE-OBJETS MINCES

(30) Priorität: 31.07.1995 DE 19527722
(43) Veröffentlichungstag der Anmeldung: 06.08.1997
(73) Patentinhaber: Leica Microsystems Wetzlar GmbH, 35578 Wetzlar (DE)
(72) Erfinder: PFEIFER, Gerhard, D-35606 Solms (DE)
(74) Vertreter: Reichert, Werner F., Dr.
(86) Internationale Anmeldenummer: DE9601404
(87) Internationale Veröffentlichungsnummer: WO97005516

(56) Entgegenhaltungen:
- US-A- 1 480 391
- US-A- 2 182 467
- US-A- 2 200 053
- US-A- 3 848 963
- US-A- 4 490 025
- US-A- 4 620 776
- US-A- 4 717 246
- US-A- 5 249 077
- US-A- 5 258 163

## Beschreibung

Die Erfindung betrifft einen Objekthalter für dünne Objektträger gemäß dem Oberbegriff des Patentanspruchs 1.

Beim Mikroskopieren werden aus Glas gefertigte Objektträger als Unterlage für die verschiedenen zu untersuchenden Objekte benutzt. Über den Objektträger bzw. den Objekthalter werden die Objekte unter dem Mikroskop bewegt, um so die verschiedenen Objektstellen in die optische Beobachtungsachse einzubringen. Bei der Verwendung von Objektträgern in Verbindung mit den sogenannten Invers-Mikroskopen sind an die Objektträger besondere Anforderungen zu stellen. Bei derartigen Mikroskopen liegt das zu untersuchende Objekt auf dem Träger. Das Mikroskopobjektiv ist unter dem Objektträger angeordnet, so daß die Abbildung des Objektes durch den aus Glas gefertigten Objektträger erfolgt. Die optische Qualität dieser Abbildung ist natürlich in hohem Maße von der Qualität des Objektträgers abhängig. Aus diesem Grund müssen die Objektträger vollkommen transparent und extrem dünn gefertigt sein. Bekannte Objektträger haben lediglich eine Stärke von ca. 0,17 mm.

Aus diesen Maßangaben wird deutlich, daß sich derartige Objektträger nicht mehr mit den herkömmlichen Objekthaltern fixieren lassen. Bei diesen Haltern ist es üblich den Objektträger über seine Kanten in einen Rahmen einzuspannen und zu halten.

Da die Halterung über die herkömmlichen Objekthalter ausscheidet, ist man in der Praxis dazu übergegangen den dünnen Objektträger mit einer Knetmasse o.ä. auf dem Mikroskoptisch zu fixieren.

Bekannte Objekthalter sind in den Dokumenten US-A-2 182 467, US-A-5 258 163, US-A-1 480 391 und US-A-3 848 963 offenbart.

Diese Art der Fixierung ist jedoch insbesondere bei der Verwendung von Mikromanipulatoren sehr störend, da der zum Arbeiten benötigte Raum zwischen dem oberhalb des Objektträgers angeordneten Kondensor und dem Objektträger eingeschränkt wird.

Es ist daher Aufgabe der vorliegenden Erfindung einen möglichst flach aufgebauten Objekthalter zu schaffen, der die bekannten dünnen Objektträger sicher fixiert.

Diese Aufgabe wird erfindungsgemäß durch die im kennzeichnenden Teil des Patentanspruches 1 angegebenen Merkmale gelöst. Weitere vorteilhafte Weiterbildungen der Erfindung sind Gegenstand der Unteransprüche.

Mit der Erfindung wird erreicht, daß die dünnen Objektträger sicher gehalten werden. Durch die flache Bauform wird in vorteilhafter Art und Weise der Raum zwischen dem Objektträger und dem Kondensor bzw. dem Objektiv (je nach Mikroskoptyp) für die Verwendung von Mikromanipulatoren nur unwesentlich eingeengt.

Die Erfindung wird anhand von Ausführungsbeispielen mit Hilfe der schematischen Zeichnung näher erläutert. Es zeigen:
- Fig. 1:: eine Ansicht eines bekannten Objekttisches in einem Invers-Mikroskop (Stand der Technik)
- Fig. 2:: ein Ausführungsbeispiel des erfindungsgemäßen Objekthalters mit zur Grundplatte orientierten Nocken
- Fig. 3:: den Objekthalter mit zwei auf der Grundplatte angeordneten Stegen
- Fig. 4:: den Objekthalter mit einem auf der Grundplatte angeordneten Steg
- Fig. 5:: den Objekthalter mit einem auf der Grundplatte angeordneten Steg und zwei Klammern
- Fig. 6a -6d:: vier verschiedene Ausführungsformen des Federstahls

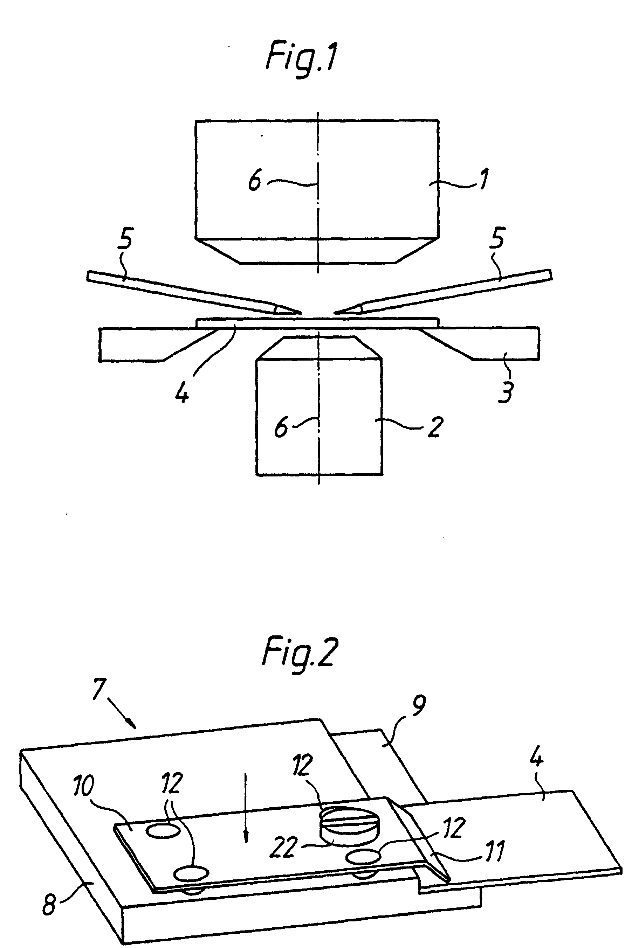

Die Figur 1 (Stand der Technik) zeigt einen bekannten Aufbau in einem Invers-Mikroskop, bei dem der Objekttisch 3 zwischen einem darüberliegenden Kondensor 1 und einem darunterliegenden Mikroskopobjektiv 2 in der optischen Achse 6 des Mikroskops angeordnet ist. Der Objekttisch 3 dient als Auflage für einen Objektträger 4, auf dem ein nicht dargestelltes Objekt angeordnet ist. Dieses Objekt wird mit zwei Mikromanipulatoren 5 bearbeitet. Aus dieser Darstellung wird deutlich, daß der freie Arbeitsabstand zwischen dem Objektträger 4 und dem Kondensor 1 möglichst groß gehalten werden muß, um damit einen großen Arbeitsraum für die Mikromanipulatoren zur Verfügung zu haben.

Die Figur 2 zeigt eine Ansicht des erfindungsgemäßen Objekthalters 7 mit einer Grundplatte 8 und einer daran angeformten, tieferliegenden Auflagefläche 9 für den Objektträger 4. Auf der Grundplatte 8 ist über eine Spannschraube 22 ein Federstahl 10 angeordnet. Der Federstahl 10 weist vier in einem Rechteck angeordnete und in Richtung der Grundplatte 8 orientierte Nocken 12 als Abstandhalter auf. Ferner ist am Federstahl 10 eine Schneide 11 vorgesehen, die über die Grundplatte 8 in Richtung der tieferliegenden Auflagefläche 9 ragt. Die Schneide 11 ist zur Klemmung des Objektträgers 4 auf der tieferliegenden Auflagefläche 9 abgewinkelt ausgebildet.

Die federnde Vorspannung des Federstahls 10 wird über die Nocken 12 und die Spannschraube 22 erreicht. Ein Wechsel bzw. eine Orientierung des Objektträges 4 kann durch einfachen Fingerdruck auf den Federstahl 10 in Pfeilrichtung erfolgen, wobei sich dadurch die Schneide 11 von der Oberfläche des Objektträgers 4 abhebt.

Der Objekthalter 7 wird zur Verwendung mit einem Invers-Mikroskop gemäß der Figur 1 oder einem herkömmlichen Mikroskop auf dem Mikroskoptisch 3 angeordnet und dort beispielsweise mit den bekannten Halteklammern für die "normalen" Objektträger fixiert.

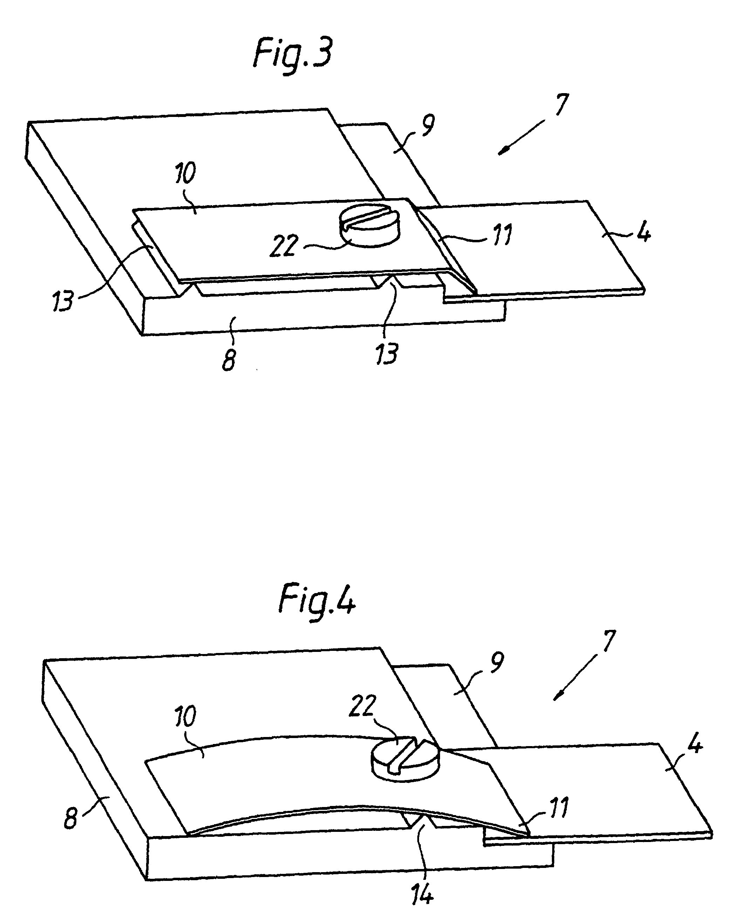

Die Figur 3 zeigt ein weiteres Ausführungsbeispiel des Objekthalters 7 mit zwei parallel zueinander auf der Grundplatte 8 angeordneten Stegen 13. Auf diesen Stegen liegt der Federstahl 10 auf. Auch hier wird die Vorspannung des Federstahls 10 über die Spannschraube 22 erreicht.

Die Figur 4 zeigt ein Ausführungsbeispiel des Objekthalters 7 mit einem auf der Grundplatte 8 angeordneten Steg 14, auf dem der Federstahl 10 aufliegt Der Federstahl 10 ist hier konvex ausgebildet und wird über die Spannschraube 22 mit der Grundplatte 8 verbunden.

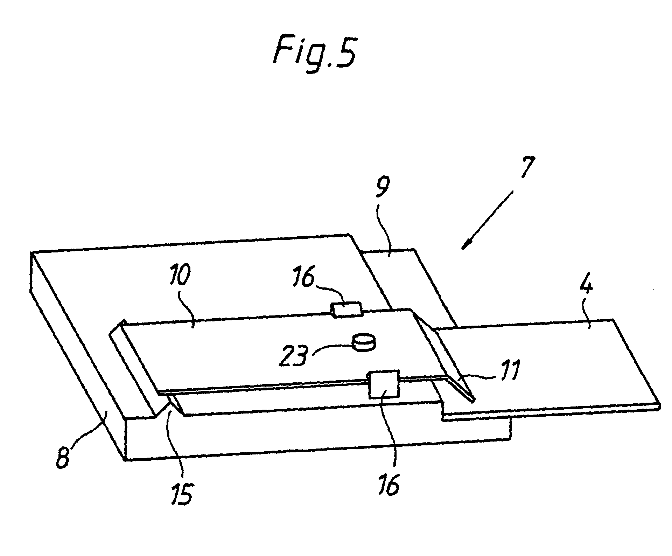

In der Figur 5 ist ein Ausführungsbeispiel des Objekthalters 7 dargestellt, bei dem der Federstahl 10 mit einem Ende auf einem an der Grundplatte 8 angeordneten Steg 15 aufliegt. Zur Halterung und Vorspannung des Federstahls 10 sind zwei Klammern 16 vorgesehen, die auf der Grundplatte 8 befestigt sind. Der Federstahl 10 ist hier über einen Orientierungszapfen 23 ausgerichtet.

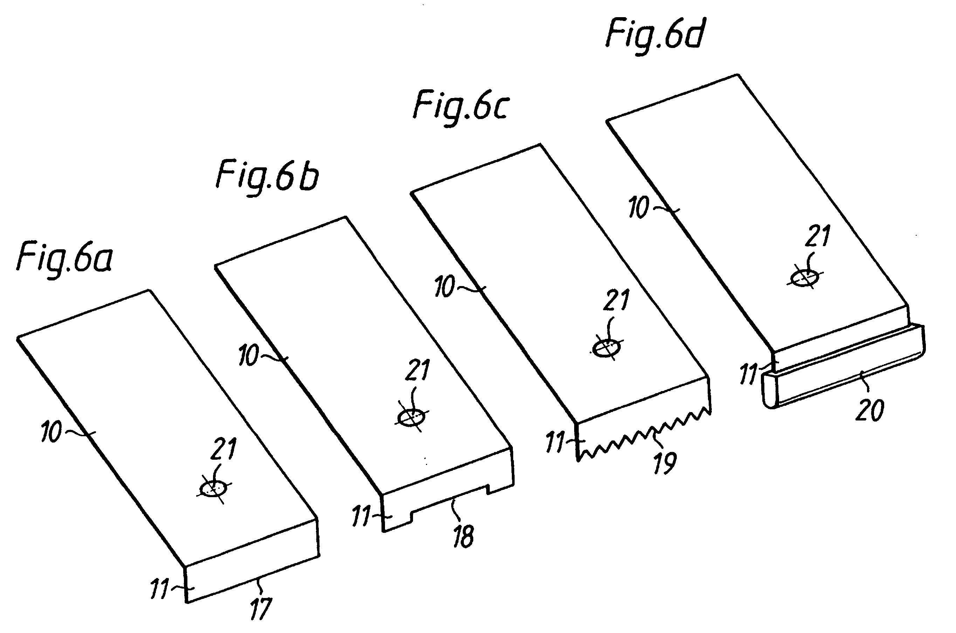

Die Figuren 6a - 6d zeigen verschiedene Ausführungsformen des Federstahls 10 mit einer Bohrung 21, durch die die Spannschraube 22 bzw. der Orientierungszapfen 23 geführt ist.

In dem Ausführungsbeispiel gemäß der Figur 6a weist die Schneide 11 des Federstahls 10 eine glatt ausgebildete Klemmkante 17 auf.

Die Figur 6b zeigt die Schneide 11 mit einer zentralen Ausnehmung 18, so daß der Objektträger 4 nur über zwei Auflagepunkte geklemmt wird.

In der Figur 6c ist die Schneide 11 mit einer Zahnung 19 versehen, damit auch die Träger 4 aus einem weicheren Material, beispielsweise aus Kunststoff, sicher gehalten werden.

Die Figur 6d zeigt den Federstahl 10 mit einem als Silikonschuh 20 ausgebildeten Schutz für die Schneide 11 bzw. den Objektträger 4. Als Material kann hier natürlich auch Kunststoff oder Gummi verwendet werden.

### Bezugszeichenliste

- 1 -: Mikroskopkondensor
- 2 -: Mikroskopobjektiv
- 3 -: Mikroskoptisch
- 4 -: Objektträger
- 5 -: Mikromanipulator
- 6 -: optische Achse
- 7 -: Objekthalter
- 8 -: Grundplatte
- 9 -: Auflagefläche
- 10 -: Federstahl
- 11 -: Schneide von 10
- 12 -: Nocken
- 13 -: Stege
- 14 -: Steg
- 15 -: Steg
- 16 -: Klammern
- 17 -: Klemmkante
- 18 -: Ausnehmung an 11
- 19 -: Zahnung
- 20 -: Silikonschuh
- 21 -: Bohrung in 10
- 22 -: Spannschraube
- 23 -: Orientierungszapfen

## Patentansprüche

1. Objekthalter (7) für dünne Objektträger (4), insbesondere für aus Glas gefertigte Objektträger für mikroskopische Untersuchungen, **dadurch gekennzeichnet, dass** der Objekthalter (7) eine Grundplatte (8) sowie eine tieferliegende Auflagefläche (9) als Aufnahme für den Objektträger (4) aufweist, auf der Grundplatte (8) ein Federstahl (10) angeordnet ist, der Federstahl (10) eine Schneide (11) aufweist und diese Schneide (11) über die Grundplatte (8) auf die tieferliegende Auflagefläche (9) ragt, wobei der Objektträger (4) über eine Klemmung zwischen der Schneide (11) und der Auflagefläche (9) fixiert wird.

2. Objekthalter (7) für dünne Objektträger (4) nach Anspruch 1, **dadurch gekennzeichnet, daß** der Federstahl (10) über mindestens zwei Auflagepunkte auf der Grundplatte (8) federnd vorgespannt befestigt ist.

3. Objekthalter (7) für dünne Objektträger (4) nach Anspruch 1 oder 2, **dadurch gekennzeichnet, daß** der Federstahl (10) vier in einem Rechteck angeordnete und zur Grundplatte (8) orientierte Nocken (12) aufweist.

4. Objekthalter (7) für dünne Objektträger (4) nach Anspruch 1 oder 2, **dadurch gekennzeichnet, daß** die Grundplatte (8) zwei parallel zueinander angeordnete Stege (13) als Auflage für den Federstahl (10) aufweist.

5. Objekthalter (7) für dünne Objektträger (4) nach Anspruch 1 oder 2, **dadurch gekennzeichnet, daß** die Grundplatte (8) einen Steg (15) als Auflage für den Federstahl (10) aufweist und zwei gegenüberliegend angeordnete Klammern (16) zur Halterung des Federstahls (10) vorgesehen sind.

6. Objekthalter (7) für dünne Objektträger (4) nach Anspruch 1 oder 2, **dadurch gekennzeichnet, daß** die Grundplatte (8) einen Steg (15) als Auflage für den Federstahl (10) aufweist und der Federstahl (10) als konvexes Bauteil ausgebildet ist.

7. Objekthalter (7) für dünne Objektträger (4) nach Anspruch 1 - 6, **dadurch gekennzeichnet, daß** die Schneide (10) als durchgehende Klemmkante (17) ausgebildet ist.

8. Objekthalter (7) für dünne Objektträger (4) nach Anspruch 1 - 6, **dadurch gekennzeichnet, daß** die Schneide (11) zur Erzeugung einer 2-Punkt-Auflage auf dem Objektträger (4) in der Mitte eine Ausnehmung (18) aufweist.

9. Objekthalter (7) für dünne Objektträger (4) nach Anspruch 1 - 6, **dadurch gekennzeichnet, daß** die Schneide (11) eine Zahnung (19) aufweist

10. Objekthalter (7) für dünne Objektträger (4) nach mindestens einem der vorherigen Ansprüche, **dadurch gekennzeichnet, daß** die Schneide (11) mit einem den Objektträger (4) schützenden Material ausgestattet ist.

11. Objekthalter (7) für dünne Objektträger (4) nach Anspruch 10, **dadurch gekennzeichnet, daß** als schützendes Material ein Silikonschuh (20) vorgesehen ist.

12. Objekthalter (7) für dünne Objektträger (4) nach mindestens einem der vorherigen Ansprüche, **dadurch gekennzeichnet, daß** die Grundplatte (8) und die Auflagefläche (9) als einstückiges Bauteil ausgebildet sind.

## Claims

1. Object holder (7) for thin slides (4), especially for slides made of glass for microscopic investigations, **characterized in that** the object holder (7) has a baseplate (8) as well as a lower lying supporting surface (9) as a receptacle for the slide (4), a spring steel (10) is arranged on the baseplate (8), the spring steel (10) has a knife edge (11) and this knife edge (11) projects beyond the baseplate (8) onto the lower lying supporting surface (9), the slide (4) being fixed via a clamp between the knife edge (11) and the supporting surface (9).

2. Object holder (7) for thin slides (4) according to claim 1, **characterized in that** the spring steel (10) is fastened in a resiliently prestressed fashion an the baseplate (8) via at least two supporting points.

3. Object holder (7) for thin slides (4) according to claim 1 or 2, **characterized in that** the spring steel (10) has four cams (12) arranged in a rectangle and orientated towards the baseplate (8).

4. Object holder (7) for thin slides (4) according to claim 1 or 2, **characterized in that** the baseplate (8) has two webs (13), arranged parallel to one another, as a support for the spring steel (10).

5. Object holder (7) for thin slides (4) according to claim 1 or 2, **characterized in that** die baseplate (8) has a web (14) an a support for the spring steel (10) and two clamps (16) arranged opposite thereto are provided far holding the spring steel (10).

6. Object holder (7) for thin slides (4) according to claim 1 or 2, **characterized in that** the baseplate (8) has a web (15) as a support for the spring steel (10), and the spring steel (10) is constructed as a convex component.

7. Object holder (7) for thin slides (4) according to claim 1 to 6, **characterized in that** the knife edge (11) is constructed as a continuous clamping edge (17).

8. Object holder (7) for thin slides (4) according to claim 1 to 6, **characterized in that** the knife edge (11) has a cutout (18) in the middle for the purpose of producing a 2-point support on the slide (4).

9. Object holder (7) for thin slides (4) according to claim 1 to 6, **characterized in that** the knife edge (11) has teeth (19).

10. Object holder (7) for thin slides (4) according to at least one of the preceding claims **characterized in that** the knife edge (11)is equipped with a material protecting the slide (4).

11. Object holder (7) for thin slides (4) according to claim 10, **characterized in that** a silicone shoe (20) is provided as the protecting material.

12. Object holder (7) for thin slides (4) according to at least one of the preceding claims **characterized in that** the baseplate (8) and the supporting surface (9) are constructed as a single-piece component.

## Revendications

1. Dispositif de fixation d'objet (7) pour des porte-objets (4) minces, notamment pour des porte-objets fabriqués en verre destinés aux analyses microscopiques, **caractérisée en ce que** le dispositif de fixation d'objet (7) comporte une plaque de base (8) ainsi qu'une surface d'appui (9) située plus bas ; laquelle surface est destinée à recevoir le porte-objet (4), destinée à ce qu'un acier à ressort (10) soit disposé sur la plaque de base (9) ; l'acier à ressort (10) comportant une lame (11) et destinée à ce que cette lame (11) fasse saillie sur la plaque de base en direction de la surface d'appui (9) située plus bas ; le porte-objet (4) étant fixé grâce à un serrage entre la lame (11) et la surface d'appui (9).

2. Dispositif de fixation d'objet (7) pour des porte-objet (4) minces selon la revendication 1, **caractérisé en ce que** l'acier à ressort (10) est fixé de manière élastiquement précontrainte par au moins deux points d'appui sur la plaque de base (8).

3. Dispositif de fixation d'objet (7) pour des porte-objet (4) minces selon la revendication 1 ou 2, **caractérisé en ce que** l'acier à ressort (10) comporte quatre cames (12) disposées dans un rectangle et orientées vers la plaque de base (8).

4. Dispositif de fixation d'objet (7) pour des porte-objets (4) minces selon la revendication 1 ou 2, **caractérisé en ce que** la plaque de base (8) comporte deux traverses (13) servant comme support pour l'acier à ressort (10) disposées de manière parallèle l'une par rapport à l'autre.

5. Dispositif de fixation d'objet (7) pour des porte-objets (4) minces selon la revendication 1 ou 2, **caractérisé en ce que** la plaque de base (8) comporte une traverse (15) servant comme appui pour l'acier à ressort (10) et à ce que deux pinces (16) disposées l'une en face de l'autre sont prévues pour maintenir l'acier à ressort (10).

6. Dispositif de fixation d'objet (7) pour des porte-objets (4) minces selon la revendication 1 ou 2, **caractérisé en ce que** la plaque de base (8) comporte une traverse (15) servant comme appui pour l'acier à ressort (10) et **en ce que** l'acier à ressort (10) est réalisé comme élément convexe.

7. Dispositif de fixation d'objet (7) pour des porte-objets (4) minces selon les revendications 1 à 6, **caractérisé en ce que** la lame (11) est réalisée en tant que bord de serrage (17) continu.

8. Dispositif de fixation d'objet (7) pour des porte-objets (4) minces selon les revendications 1 à 6, **caractérisé en ce que** la lame (11) comporte au milieu un évidemment (18) destiné à destiner un appui à deux points sur le porte-objet (4).

9. Dispositif de fixation d'objet (7) pour des porte-objets (4) minces selon les revendications 1 à 6, **caractérisé en ce que** la lame (11) comporte une denture (19)

10. Dispositif de fixation d'objet (7) pour des porte-objets (4) minces selon au moins une des revendications précédentes, **caractérisé en ce que** la lame (11) est pourvue d'une matière protégeant le porte-objet.

11. Dispositif de fixation d'objet (7) pour des porte-objets (4) minces selon au moins une des revendications précédentes, **caractérisé en ce qu'**on a prévu comme matériau de protection, un patin en silicone (20).

12. Dispositif de fixation d'objet (7) pour des porte-objets (4) minces selon au moins une des revendications précédentes, **caractérisé en ce que** la plaque de base (8) et la surface d'appui (9) sont réalisés comme un élément en une pièce.
